# Europäisches Patentamt
# European Patent Office
# Office européen des brevets

(19)

(11) Veröffentlichungsnummer: **0 118 914**
**A2**

(12)

# EUROPÄISCHE PATENTANMELDUNG

(21) Anmeldenummer: **84102680.0**

(22) Anmeldetag: **12.03.84**

(51) Int. Cl.³: **B 44 B 5/00**

(30) Priorität: **14.03.83 BG 60094/83**

(43) Veröffentlichungstag der Anmeldung:
**19.09.84 Patentblatt 84/38**

(84) Benannte Vertragsstaaten:
**AT CH DE FR GB IT LI SE**

(71) Anmelder: **INSTITUT PO TECHNITSCHESKA
KIBERNETIKA I ROBOTIKA
Akademik Bontschev-Strasse, Block 2
Sofia(BG)**

(72) Erfinder: **Rigov, Spas Nikolov, Dipl.-Ing.
Boul. Hr. Botev 127
Sofia(BG)**

(72) Erfinder: **Kolev, Koljo Nenkov, Dipl.-Ing.
Ek. Simidtschieva-Strasse 45
Sofia(BG)**

(72) Erfinder: **Michajlov, Emil Dimitrov, Dipl.-Ing.
Cmartsch-Strasse 18
Sofia(BG)**

(72) Erfinder: **Genov, Dantscho Ivanov
Komplex Mladost 1 Block 43-9
Sofia(BG)**

(72) Erfinder: **Stoitschkov, Kiril Iliev
Komplex Lenin Bl. 66-A
Sofia(BG)**

(72) Erfinder: **Georgiev, Konstantin Petrov
Dr. Seliminski-Strasse Nr. 11
Sofia(BG)**

(74) Vertreter: **Finck, Dieter et al,
Patentanwälte v. Füner, Ebbinghaus, Finck Mariahilfplatz
2 & 3
D-8000 München 90(DE)**

(54) **Verfahren und Vorrichtung zur Herstellung eines Reliefabdrucks.**

(57) Durch Abwälzen eines an einer kegeligen Fläche (11)
angeordneten negativen Teils auf einem positiven Teil (13),
der in einer horizontalen Ebene angeordnet ist, wird unabhängig von Blattstärkenänderungen ein klarer, deutlicher
Prägedruck eines Reliefbildes erreicht.

v. FÜNER    EBBINGHAUS    0118914

PATENTANWÄLTE    EUROPEAN PATENT ATTORNEYS

MARIAHILFPLATZ 2 & 3, MÜNCHEN 90

POSTADRESSE: POSTFACH 95 01 60, D-8000 MÜNCHEN 95

INSTITUT PO TECHNITSCHESKA          EPAC-31734.0
KIBERNETIKA I ROBOTIKA
                                    12. März 1984 Fi/ba


VERFAHREN UND VORRICHTUNG ZUR HERSTELLUNG EINES RELIEF-
ABDRUCKS


Die Erfindung betrifft ein Verfahren zur Herstellung eines Reliefabdrucks, bei dem das Bild durch Anpressen eines negativen Teils an einem positiven Teil erzeugt wird.

Die Erfindung betrifft weiterhin eine Vorrichtung zur Durchführung dieses Verfahrens mit einem Antriebsorgan, welches das negative Teil des Reliefbilds trägt, und einem festen Stütztisch mit dem positiven Teil des Reliefbilds.

Zur Herstellung eines Reliefabdrucks ist aus der SU-A-482 330 bereits ein Verfahren bekannt, bei welchem Stempel mit Buchstaben, Ziffern und Figurendarstellungen auf Dokumente aufgedrückt werden. Dabei wird das Reliefbild direkt auf ein Blatt mit Foto trocken aufgedruckt, welches zwischen einem negativen und einem positiven Teil des Stempels, die gegeneinander gepreßt werden, eingelegt wird. Dies wird mit Hilfe einer mechanischen Spindelpresse durchgeführt, welche einen ortsfesten Stütztisch mit dem positiven Teil des Stempels sowie einen in senkrechter Richtung beweglichen Stempel mit einem austauschbaren Endstück aufweist, an dem der negative Teil

des Stempels befestigt ist.

Der damit hergestellte Reliefabdruck variiert in Höhe, Klarheit und Qualität. Infolge der etagenweisen Anordnung des Fotos in bezug auf das Blatt, auf dem es befestigt ist, ist das Reliefbild auf dem Foto klar, nicht jedoch auf dem das Foto tragenden Blatt, weil das Reliefbild mit unterschiedlicher Kraft gegen das Foto und das Blatt gedrückt wird. Außerdem wird das Papier an der Peripherie des Stempels häufig eingerissen. Ein solcher Abdruck mit schlechter Qualität ist leicht fälschbar. Das Arbeitsgeräusch der Spindelpresse ist zudem sehr laut.

Der Erfindung liegt deshalb die Aufgabe zugrunde, das Verfahren und die Vorrichtung der eingangs genannten Art so auszubilden, daß im wesentlichen geräuschloser, betriebssicher und während langer Zeiträume auf einfache Weise Reliefabdrucke mit gleichbleibender Höhe, Klarheit und Qualität hergestellt werden können.

Diese Aufgabe wird erfindungsgemäß mit dem Verfahren der eingangs genannten Art dadurch gelöst, daß das negative Teil, welches auf einer kegeligen Oberfläche angeordnet ist, über das positive Teil des Reliefbildes abgewälzt wird, welches in einer horizontalen Ebene angeordnet ist.

Die genannte Aufgabe wird außerdem erfindungsgemäß mit der Vorrichtung der eingangs genannten Art dadurch gelöst, daß das Antriebsorgan einen Elektromotor aufweist, dessen Welle mit einer parallel angeordneten exzentrischen Welle verbunden ist, an der ein Planetenzahnrad angebracht ist, das mit einem innenverzahnten Zahnrad in Eingriff steht, das in einer Pinole sitzt, die fest mit dem Elektromotor verbunden ist, daß auf einem exzentrisch angeordneten Zapfen des Planetenzahnrads ein sich selbst einstellendes Lager angeordnet ist, das in den Lagersitz eines Gleitstücks eingesetzt ist, welches ein austauschbares Endstück mit einer Kegelscheibe aufweist, die das negative Teil des Reliefbilds und einen Stift trägt, der in einer am Stütztisch befestigten Gabel fixiert ist, daß das Gleitstück durch eine Feder dauernd in Kontakt mit einer halbkugeligen Buchse gehalten ist, und daß an der Pinole an ihrem unteren Teil ein Nonius und an ihrem oberen Teil eine Zahnstange vorgesehen ist, die über ein Antriebszahnrad mit einer Welle eines Elektromotors für eine vertikale Bewegung verbunden ist.

Erfindungsgemäß läßt sich ein klares, genaues Reliefbild herstellen, das gleiche Abdruckhöhen, z.B. auf einem Foto und einem Grundblatt eines Dokuments, welches das Foto trägt, hat. Die hohe kinematische Genauigkeit der Vorrichtung ermöglicht einen mehrfachen Durchlauf des erzeugten Abdrucks durch die Vorrichtung, wodurch das Relief und seine Klarheit verbessert werden, und zwar ohne jegliche Gefahr einer Beschädigung des Papiers und des Fotos.

Anhand einer Zeichnung, die im Längsschnitt ein Ausführungsbeispiel einer Vorrichtung zur Herstellung eines Reliefabdrucks zeigt, wird die Erfindung näher erläutert.

Die Vorrichtung für das Abdrucken eines Reliefbilds besteht aus einem Elektromotor 1, der an einer Pinole 2 befestigt ist. Mit dem freien Ende einer Welle des Elektromotors 1, die eine Achse $O_1$ aufweist, ist exzentrisch das eine Ende einer Welle 3 verbunden, deren Achse $O_2$ zur Achse $O_1$ parallel ist. Am anderen Ende der exzentrischen Welle 3 sitzt ein Planetenzahnrad 4, das in Eingriff mit einem innenverzahnten Zahnrad 5 steht, welches fest in der Pinole 2 montiert ist. Das Planetenzahnrad 4 hat einen Zapfen 6 mit einer Achse $O_3$, die parallel zur Achse $O_2$ ist. Auf dem Zapfen 6 ist ein sich selbst einstellendes Lager 7 angebracht, das in einem Lagersitz eines Gleitstücks 8 eingesetzt ist, dessen dem Elektromotor 1 zugewandtes eines Ende in dauerndem Kontakt mit einer halbkugeligen Oberfläche einer Buchse 9 steht, die fest in der Pinole 2 unterhalb des innenverzahnten Zahnrads 5 angebracht ist. Am anderen Ende des Gleitstücks 8 ist ein Endstück 10 mit einer Kegelscheibe 11 austauschbar befestigt, welche das negative Teil bzw. Abbild des Reliefs trägt. Unterhalb der Kegelscheibe 11 ist auf einem Stütztisch 12 eine Scheibe 13 mit dem positiven Teil bzw. der positiven Hälfte des Abbilds des Reliefs fest angebracht. Auf dem Stütztisch 12 ist eine Gabel 14 vorgesehen, in die das freie Ende eines am Endstück 10 festgelegten Stiftes 15 eingelegt ist. Das Gleitstück 8 wird durch eine Feder 16 an die halbkugelige Buchse 9 angedrückt. An der Pinole 2 ist ein Nonius 17 montiert, der ihre axiale Versetzung während des Abstempelns reguliert und die erforderliche Kraft gewährleistet. Auf der oberen Außenfläche der Pinole 2 ist eine Zahnstange 18 vorgesehen, die in Eingriff mit einem Antriebszahnrad 19 ist, welches mit einer Welle 20 eines Elektromotors für eine vertikale Bewegung verbunden ist.

Beim Einschalten des Elektromotors 1 wird die exzentrische Welle 3 in Bewegung gesetzt, die auf das Planetenzahnrad 4 übertragen wird, welches sich bei dieser Drehbewegung auf dem innenverzahnten Zahnrad 5 abwälzt. Über den exzentrischen Zapfen 6 führt dabei das Gleitstück 8 eine schwingende Bewegung aus, wobei es über die halbkugelige Oberfläche der Buchse 9 gleitet. Diese Bewegung des Gleitstücks 8 resultiert in einer Wälzbewegung der kegeligen Oberfläche 11 gegenüber dem gegenüberliegenden positiven Teil 13 der Vorrichtung.

Die Blätter, auf denen der Reliefabdruck hergestellt werden soll, werden zwischen das positive und negative Teil der Vorrichtung eingelegt. Beim Einschalten des Elektromotors für die vertikale Bewegung wird über die Zahnstange 18 und das Antriebszahnrad 19 die Pinole 2 in axialer Richtung versetzt, wodurch eine für das Abdrucken des Reliefbilds erforderliche axiale Kraft erzeugt und konstant aufrechterhalten wird. Der Stift 15 gelangt in die Gabel 14, wodurch die Wälzbewegung ohne Drehung des oberen Teils in bezug auf den ortsfesten Teil 13 erreicht wird. Die Größe der axialen Kraft, die für die Erzeugung des Reliefdrucks des Stempelbilds erforderlich ist, wird in Abhängigkeit der Art und des Dickenunterschieds der schichtweise angeordneten Blätter über den Nonius 17 reguliert, der das axiale Versetzen der Pinole 2 während des Druckvorgangs einschränkt und für die erforderliche Kraft sorgt.

Der Zyklus des Abdruckens des Reliefbilds ist vollständig automatisiert. Bei der Aufgabe des Startsignals wird die Pinole 2 in Axialrichtung versetzt, die kegelige Oberfläche 11 führt eine Wälzbewegung aus und die Pinole 2 kehrt in ihre Ausgangsposition zurück.

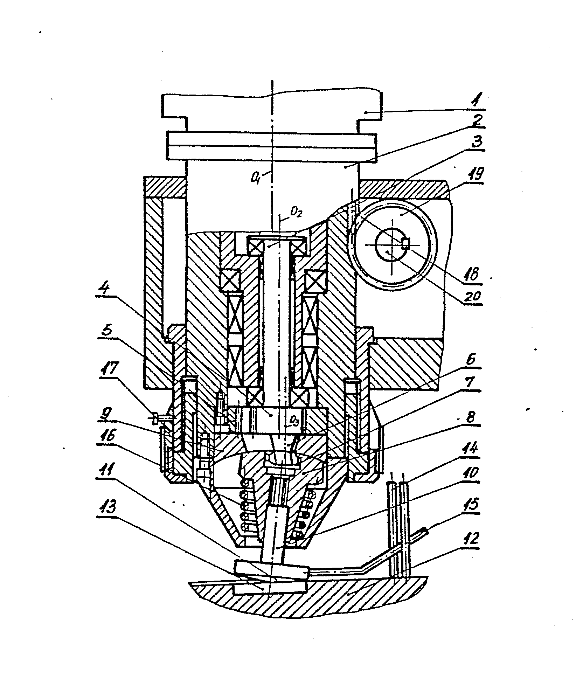

Patentansprüche

1. Verfahren zur Herstellung eines Reliefabdrucks, bei dem das Bild durch Anpressen eines negativen Teils an einem positiven Teil erzeugt wird, dadurch g e k e n n z e i c h n e t, daß das negative Teil, welches auf einer kegeligen Oberfläche angeordnet ist, über das positive Teil des Reliefbildes abgewälzt wird, welches in einer horizontalen Ebene angeordnet ist.

2. Vorrichtung zur Durchführung des Verfahrens nach Anspruch 1 mit einem Antriebsorgan, welches das negative Teil (11) des Reliefbilds trägt, und einem festen Stütztisch (12) mit dem positiven Teil (13) des Reliefbilds, dadurch g e k e n n z e i c h n e t, daß das Antriebsorgan einen Elektromotor (1) aufweist, dessen Welle mit einer parallel angeordneten exzentrischen Welle (3) verbunden ist, an der ein Planetenzahnrad (4) angebracht ist, das mit einem innenverzahnten Zahnrad (5) in Eingriff steht, das in einer Pinole (2) sitzt, die fest mit dem Elektromotor (1) verbunden ist, daß auf einem exzentrisch angeordneten Zapfen (6) des Planetenzahnrads (4) ein sich selbst einstellendes Lager (7) angeordnet ist, das in den Lagersitz eines Gleitstücks (8) eingesetzt ist, welches ein austauschbares Endstück (10) mit einer Kegelscheibe (11) aufweist, die das negative Teil des Reliefbilds und einen Stift (15) trägt, der in einer am Stütztisch (12) befestigten Gabel (14) fixiert ist, daß das Gleitstück (8) durch eine Feder (16) dauernd in Kontakt mit einer halbkugeligen Buchse (9) gehalten ist, und daß an der Pinole (2) an ihrem unteren Teil ein Nonius (17) und an ihrem oberen Teil eine Zahnstange (18) vorgesehen ist, die über ein Antriebszahnrad (19) mit einer Welle (20) eines Elektromotors für eine vertikale Bewegung verbunden ist.